Europäisches Patentamt

European Patent Office

Office européen des brevets

(11) Veröffentlichungsnummer: **0 256 316**
**A1**

(12) **EUROPÄISCHE PATENTANMELDUNG**

(21) Anmeldenummer: **87110284.4**

(22) Anmeldetag: **16.07.87**

(51) Int. Cl.³: **C 09 J 3/12**

(30) Priorität: **24.07.86 DE 3625030**

(43) Veröffentlichungstag der Anmeldung:
**24.02.88 Patentblatt 88/8**

(84) Benannte Vertragsstaaten:
**AT BE DE ES FR GB IT NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Kohlstadt, Hans-Peter**
**Virchowstrasse 16a**
**D-5620 Velbert(DE)**

(54) **Niedrigviskose, vorgelierbare Klebstoffe auf Kautschukbasis, Verfahren zu ihrer Herstellung und ihre Verwendung.**

(57) Die Erfindung betrifft Klebstoffe auf Kautschukbasis, enthaltend stereospezifischen Polybutadien-Flüssigkautschuk, stereospezifischen cis-1,4-Butadien-Festkautschuk und/oder festen Naturkautschuk, einen oder mehrere Härter oder Härtersysteme, Füllstoffe und gegebenenfalls Haftvermittler, die dadurch gekennzeichnet sind, daß sie als Festkautschuk-Komponente einen oder mehrere chemisch irreversibel depolymerisierte Festkautschuke natürlichen oder synthetischen Ursprungs in Mengen von 1,5 bis 5 Gew.-%, bezogen auf die Summe der Bestandteile, enthalten, ein Verfahren zur Herstellung derartiger niedrigviskoser Klebstoffe auf Kautschukbasis durch chemisch irreversible Depolymerisation eines oder mehrerer Festkautschuke natürlichen oder synthetischen Ursprungs sowie die Verwendung derartiger niedrigviskoser Klebstoffe auf Kautschukbasis bei der Verklebung von Metallteilen im Automobilbau.

EP 0 256 316 A1

**0256316**

Henkel KGaA
21.07.1986
Dr.SchOe/Ge

Patentanmeldung
D 7253I EP

## Niedrigviskose, vorgelierbare Klebstoffe auf Kautschukbasis, Verfahren zu ihrer Herstellung und ihre Verwendung

Die Erfindung betrifft niedrigviskose, vorgelierbare Klebstoffe auf Kautschukbasis mit verbesserten Anwendungseigenschaften, Verfahren zur Herstellung derartiger neuer Klebstoffe sowie ihre Verwendung.

Die Verwendung von Epoxidharz- bzw. Plastisolklebstoffen im Automobilbau ist seit langer Zeit bekannt. Wichtige Anforderungen, die an derartige Klebstoffe gestellt werden, sind die gute Haftung des Klebstoff-Materials auf Stahloberflächen und verzinkten Oberflächen sowie eine Vorgelierbarkeit des Klebstoffes bei Temperaturen schon ab 120°C.

...

Gute Ergebnisse werden auch erhalten mit lösungsmittelfreien Klebstoffen auf Kautschukbasis. An derartige Klebstoffe auf Kautschukbasis werden hinsichtlich der Festigkeit der Klebeverbindung sowie der Kälteflexibilität hohe Anforderungen gestellt. Außerdem müssen derartige Materialien eine niedrige Viskosität sowie gute rheologische Eigenschaften, beispielsweise einen kurzen Abriß und eine hohe Standfestigkeit, aufweisen, um im Automobilbau zu stabilen und langfristig haltbaren Klebeverbindungen zu führen. Um dies zu erreichen ist es erforderlich, zusätzlich zu den flüssigen Kautschuk-Grundmaterialien Festkautschuke einzusetzen. Als solche wurden beispielsweise in der EP-A 0 097 394 stereospezifischer 1,4-Butadienkautschuk mit wenigstens 40 % der ungesättigten Seitenketten in 1,4-Konfiguration eingesetzt. Die Verwendung derartiger Festkautschuke ist jedoch ebenfalls mit gravierenden Nachteilen für den anwendungstechnischen Bereich verbunden. Es lassen sich zwar die geforderten Festigkeiten der Klebeverbindung sowie eine hohe Kälteflexibilität erreichen, jedoch nur unter Inkaufnahme einer hohen Viskosität der Klebstoffe, die damit schlecht zu verarbeiten waren. Wird jedoch andererseits die Viskosität auf einen der praktischen Anwendbarkeit entsprechenden Wert eingestellt, so hat dies eine den Anforderungen nicht gerecht werdende Festigkeit der Klebeverbindungen und unbefriedigende rheologische Eigenschaften der Klebstoffe zur Folge: Der Klebstoff zieht

...

Fäden und läuft von den Verbindungsstellen ab, was
ebenfalls unerwünscht war. Eine Vorgelierbarkeit bei
vergleichsweise niedrigen Verarbeitungstemperaturen
war zudem mit den in der EP-A 0 097 394 offenbarten
Klebstoffen auf Kautschukbasis unter Verwendung von
Festkautschuken, wie festem Polybutadien, nicht zu
erreichen.

Zudem ließen sich mit den im Stand der Technik offenbarten Fest-/Flüssigkautschuk-Mischungen herkömmliche
Vulkanisationssysteme (Härtersysteme) gar nicht verwenden. Der Einsatz von Vulkanisationsbeschleunigern
wie Dibenzothiazyldisulfid oder Diphenylguanidin führte zudem zu den Nachteilen, daß eine Vorgelierbarkeit
erst ab 160°C möglich war und sich bei Vorgeliertemperaturen von 160°C und Aushärtetemperaturen oberhalb
von 200°C Blasen im ausgehärteten Klebstoff bildeten,
die die Haftung drastisch verschlechterten.

Aufgabe der vorliegenden Erfindung war es, neue Klebstoffmaterialien auf Kautschukbasis zur Verfügung zu
stellen, die die Vorteile herkömmlicher Klebstoffe
wie Epoxidharz- bzw. Plastisolklebstoffen (höhere
Elastizität, Halogenfreiheit) mit den bekannten
positiven Eigenschaften der Plastisolkleber, wie beispielsweise Vorgelierbarkeit bei relativ niedrigen
Temperaturen und gute Haftung auf Stahloberflächen und
verzinkten Oberflächen, kombinieren. Zudem war ein
hohes Festigkeitsniveau der Klebungen sicherzustellen
und die Verarbeitbarkeit bisher bekannter Klebstoffe
insofern zu verbessern, als eine niedrigere Viskosität
mit guten rheologischen Eigenschaften (kurzer Abriß,

. . .

hohe Standfestigkeit) zu verbinden war. Eine weitere Forderung war eine hervorragende Lagerstabilität. Außerdem sollte erreicht werden, daß die neuen Klebstoffe auf Kautschukbasis besser mit herkömmlichen Vulkanisationsbeschleunigern kompatibel sind.

Überraschend wurde nun gefunden, daß Klebstoffe niedriger Viskosität und für die Anwendungstechnik befriedigendem rheologischen Verhalten, die eine hohe Festigkeit der Klebeverbindungen bewirken können, dann erhalten werden, wenn man anstelle von festen, stereospezifischen 1,4-Butadienkautschuken chemisch irreversibel depolymerisierte Festkautschuke einsetzt.

Die Erfindung betrifft Klebstoffe auf Kautschukbasis, enthaltend

(a) stereospezifischen Polybutadien-Flüssigkautschuk in Mengen von 20 bis 60 Gew.-%,

(b) stereospezifischen cis-1,4-Butadien-Festkautschuk und/oder festen Naturkautschuk in Mengen von 2 bis 8 Gew.-%,

(c) einen oder mehrere Härter oder Härtersysteme in Mengen von 5 bis 15 Gew.-%,

(d) Füllstoffe in Mengen von 25 bis 70 Gew.-% und gegebenenfalls

(e) Haftvermittler in Mengen von 1 bis 8 Gew.-%,

dadurch gekennzeichnet, daß sie als Komponente (b) einen oder mehrere chemisch irreversibel depolymerisierte Festkautschuke natürlichen oder synthetischen Ursprungs in Mengen von 1,5 bis 5 Gew.-%, bezogen auf die Summe der Bestandteile, enthalten.

...

Die Erfindung betrifft außerdem ein Verfahren zur Herstellung von Klebstoffen auf Kautschukbasis mit einem Gehalt an

(a) stereospezifischem Polybutadien-Flüssigkautschuk von 2 bis 6 Gew.-%,

(b) stereospezifischem cis-1,4-Butadien-Festkautschuk und/oder festem Naturkautschuk von 1 bis 10 Gew.-%,

(c) einem oder mehreren Härtern oder Härtersystemen von 5 bis 15 Gew.-%,

(d) Füllstoffen von 25 bis 70 Gew.-% und gegebenenfalls

(e) Haftvermittlern von 1 bis 8 Gew.-%, und/oder Schwefel in einer Menge von 2 bis 12 Gew.-%

dadurch gekennzeichnet, daß man

(f) einen oder mehrere Festkautschuke natürlichen oder synthetischen Ursprungs chemisch irreversibel bis auf eine Viskosität von 2000 P bis 20 000 P bei 20°C depolymerisiert,

(g) die erhaltenen Depolymerisationsprodukte gegebenenfalls in Flüssigkautschuk löst, und

(h) die erhaltenen Lösungen auf an sich bekannte Weise mit den Komponenten (a) und (c) bis (e) zu einer einheitlichen Kautschukmischung verarbeitet.

Die Erfindung betrifft außerdem die Verwendung der Klebstoffe auf Kautschukbasis bei der Verklebung von Metallteilen im Automobilbau.

Als Flüssigkautschuke lassen sich alle für die Verwendung im Klebstoffbereich bekannten stereospezifischen Polybutadien-Flüssigkautschuke einsetzen. Als solche werden bevorzugt solche mit einem Molekulargewicht von 1000 bis 8000 verwendet. Aus der genannten Gruppe lassen sich mit Vorteil diejenigen Polybuta-

...

diene mit stereospezifischem Aufbau einsetzen, die
zwischen 40 bis 95 % 1,4-Konfiguration aufweisen.

In den erfindungsgemäßen Klebstoffen auf Kautschukbasis werden aus dieser Gruppe bevorzugt solche mit
mehr als 80 % 1,4-Bindung verwendet.

Als Härtersysteme für das Härten der Flüssigkautschuk-/Festkautschuk-Mischungen werden an sich für
diesen Zweck bekannte Agentien eingesetzt, die durch
entsprechende Abstimmung, Kombination und Konzentration die gewünschten Festigkeiten ab Härtungstemperaturen von 120°C bis 240°C erbringen. Dies können herkömmliche einstufige Härtersysteme, wie beispielsweie
Dibenzothiazyldisulfid, oder auch zweistufige Härtersysteme sein, die eine Vorgelierbarkeit der Klebstoffe
ab 120°C ermöglichen. Mit Vorteil werden als Vulkanisationssysteme solche Zweistufen-Härtersysteme verwendet, die für die erste Stufe N-Cyclohexyl-2-benzothia-
zylsulfenamid und 2-Mercaptobenzothiazol sowie für die
zweite Stufe Diorthotolylguanidin enthalten. Solche
Härter bzw. Härtersysteme werden üblicherweise in Mengen von 4,5 bis 6,0 Gew.-%, bezogen auf das Gesamtgewicht der Klebstoffmischung, eingesetzt.

Die erfindungsgemäßen Klebstoffe auf Kautschukbasis
enthalten außerdem einen oder mehrere Füllstoffe zur
Einstellung des rheologischen Verhaltens in Mengen von
25 bis 70 Gew.-%, bezogen auf das Gesamtgewicht der
erfindungsgemäßen Klebstoffe. Der Zusatz dient u.a.
auch der Einstellung des rheologischen Verhaltens. Als
Füllstoffe können alle für diesen Zweck aus dem Stand
der Technik bekannten Substanzen verwendet werden,

...

wobei dies einzelne Stoffe oder auch Kombinationen mehrerer Füllstoffe sein können. Bevorzugt werden als Füllstoffe Zinkoxid, Calciumoxid, Kieselsäure, Magnesium-Aluminium-Silikate oder Ruß in unterschiedlichen Mengenverhältnissen verwendet. Beispielsweise können die Mengen an Zinkoxid im Bereich von 1 bis 5 Gew.-%, die Mengen an Calciumoxid im Bereich von 3 bis 8 Gew.-%, die Mengen an Kieselsäure im Bereich von 1 bis 5 Gew.-%, die Mengen an Mangesium-Aluminium-Silikat im Bereich von 20 bis 50 Gew.-% und die Mengen an Ruß im Bereich von 0,5 bis 2 Gew.-% liegen, wobei die Gewichtsprozent-Angaben auf das Gesamtgewicht der Klebstoffbestandteile bezogen sind. In Einzelfällen kann jedoch auch der angegebene Bereich für die einzelnen Füllstoffkomponenten nach oben oder nach unter überschritten werden.

Üblicherweise enthalten die Klebstoffe auf Kautschukbasis auch einen oder mehrere Haftvermittler in Mengen von 1 bis 8 Gew.-%, bezogen auf das Gesamtgewicht aller Komponenten der Klebstoffmischungen. Diese Haftvermittler werden zur Verbesserung der Haftung der formulierten Klebstoffe auf Stahloberflächen und insbesondere verzinkten Stahloberflächen eingesetzt. Als Haftvermittler kommen beispielsweise Substanzen wie Phenol-Resol-Harze in Frage, vorzugsweise solche mit einem Gehalt an freiem Phenol, der bis zu 4 bis 7 % betragen kann.

Erfindungsgemäße Komponenten der Klebstoffe auf Kautschukbasis gemäß der vorliegenden Anmeldung sind jedoch die stereospezifischen cis-1,4-Butadien-Festkautschuke und/oder festen Naturkautschuke, die in den Klebstoffen enthalten sind. Derartige stereospezifische cis-1,4-Butadien-Festkautschuke und/oder festen

. . .

Naturkautschuke sind chemisch irreversibel depolymerisierte Festkautschuke natürlichen oder synthetischen Ursprungs. Ihr vorteilhafter Einfluß auf Viskosität, Elastizität, rheologisches Verhalten und Haftvermögen resultiert daraus, daß sie aus synthetischen Kautschuken oder natürlichen Kautschuken bis auf eine Viskosität von 2000 P bis 20 000 P bei 20°C chemisch irreversibel depolymerisiert werden. Die Depolymerisation erfolgt bevorzugt dadurch, daß die hochpolymeren Rohprodukte auf friktionierten Walzen depolymerisiert werden. Dabei wird ein Abbau auf den geforderten Molekulargewichtsbereich unmittelbar erreicht.

Alternativ kann - mit demselben vorteilhaften Ergebnis - die Depolymerisation auch dadurch erfolgen, daß man die Festkautschuke natürlichen bzw. synthetischen Ursprungs in einem Stempelkneter depolymerisiert. Dies kann in Gegenwart oder auch in Abwesenheit eines Depolymerisationsbeschleunigers geschehen, wobei der Einsatz eines derartigen Beschleunigers bevorzugt ist. Als Depolymerisationsbeschleuniger lassen sich an sich für diesen Zweck bekannte Verbindungen verwenden. Als solche ist beispielsweise das Zinksalz von Pentachlorthiophenol geeignet.

Die Depolymerisation wird bei Temperaturen im Bereich von 120°C bis 150°C durchgeführt und ergibt Produkte mit dem gewünschten Molekulargewicht bzw. der gewünschten Viskosität.

Die erhaltenen Depolymerisationsprodukte werden anschließend zur besseren Einarbeitbarkeit in Klebstoffe in Flüssigkautschuk gelöst. Als "Lösungsmittel" lassen sich bevorzugt Flüssigkautschuke mit einem Molekulargewicht im Bereich von 1000 bis 8000 verwenden, die

...

chemisch den erfindungsgemäß depolymerisierten Festkautschuken sehr ähnlich sind. Als Lösemittel lassen
sich Flüssigkautschuke aus der Gruppe eines Molekulargewichts von 1000 bis 3000 mit Vorteil verwenden.

Der Schritt des Lösens der erhaltenen Depolymerisationsprodukte in Flüssigkautschuk kann jedoch auch
vermieden werden, wenn man beispielsweise Naturkautschuke einsetzt, deren Depolymerisation unmittelbar
zu depolymerisierten Naturkautschuken der gewünschten
Konsistenz führt. Beispielsweise kann ein liquid-natural-rubber der Handelsbezeichnung DPR 75 der Firma
HarDman (USA) eingesetzt werden, dessen Depolymerisation zu einem Produkt mit zähfließender Konsistenz
führt, das ohne Lösen in Flüssigkautschuk für Klebstoffe gemäß der vorliegenden Erfindung geeignet ist.

Üblicherweise enthalten Kautschukmischungen für Klebstoffe für die Vulkanisation auch elementaren Schwefel
in Form von Mahlschwefel. Für Klebstoffe gemäß der
vorliegenden Erfindung kommen Schwefelmengen im Bereich von 2 bis 12 Gew.-% in Frage.

Die erfindungsgemäßen Klebstoffe auf Kautschukbasis,
die die oben näher beschriebenen Komponenten enthalten, werden dadurch hergestellt, daß man einen oder
mehrere Kautschuke natürlichen oder synthetischen Ursprungs chemisch irreversibel bis auf eine Viskosität
im Bereich von 2000 bis 20 000 P bei 20°C depolymerisiert. Dies kann, wie angegeben, dadurch geschehen,
daß man den Festkautschuk bzw. die Festkautschuk-Mischungen auf friktionierten Walzen depolymerisiert
oder einer Depolymerisation in einem Stempelkneter
unterwirft. Dazu wird bevorzugt ein Depolymerisations-

...

beschleuniger, beispielsweise das Zinksalz des Pentachlorthiophenols, eingesetzt. Die erhaltenen Depolymerisationsprodukte werden in Flüssigkautschuk eingerührt und dadurch gelöst. Dieser Lösungsvorgang dient
der besseren Einarbeitbarkeit der erhaltenen Depolymerisationsprodukte in die Klebstoffmischungen. Als
Lösemittel werden chemisch verwandte Flüssigkautschuke
mit einem bevorzugten Molekulargewicht im Bereich von
1000 bis 3000 verwendet.

Die erhaltenen Lösungen werden in an sich bekannten
Mischern und/oder Knetern mit den anderen Komponenten
(Flüssigkautschuk, Härter bzw. Härtersystem, Füllstoff
(e) und gegebenenfalls Haftvermittler) vermischt.

Die entstandenen Mischungen sind elastische, auch bis
zu niedrigen Temperaturen kälteflexible Klebstoffe,
die kein Halogen enthalten und gute rheologische
Eigenschaften aufweisen. Ihre Haftung auf Stahl und
verzinktem Stahl, selbst in geöltem Zustand, ist hervorragend. Die Lagerstabilität der erfindungsgemäßen
Klebstoffmischungen liegt – selbst unter extremen Bedingungen – deutlich über den für herkömmliche Klebstoffe bekannten Lagerstabilitäten.

Im Vergleich zu Klebstoffen mit nichtdepolymerisiertem
Festkautschuk zeigen Klebstoffe mit depolymerisiertem
Festkautschuk eine deutlich niedrigere Viskosität bei
höherem Festigkeitsniveau. Dabei sind ebenfalls die
rheologischen Eigenschaften hervorragend: Lange Abrisse bzw. Fädenziehen wurden nicht beobachtet.

Bei Verwendung von depolymerisiertem Naturkautschuk in
den erfindungsgemäßen Klebstoffen werden mit der Verwendung von depolymerisiertem Synthesekautschuk ver-

. . .

gleichbare Ergebnisse, wie gutes rheologisches Verhalten bei niedriger Viskosität sowie ein sehr hohes Festigkeitsniveau beobachtet.

Die Erfindung wird durch die nachfolgenden Beispiele näher erläutert.

Zur Herstellung der erfindungsgemäßen niedrigviskosen Klebstoffe auf Kautschukbasis wurden die in der nachfolgenden Tabelle 1 angegebenen Komponenten verwendet.

...

Tabelle 1

Komponenten zur Herstellung der erfindungsgemäßen
Klebstoffe

| Abkürzung | Bezeichnung |
|---|---|
| FlK | Flüssigkautschuk auf Basis cis-1,4-Polybutadien (MG 1500 nach Dampfdruck-osmose) |
| K1 | Festkautschuk-Basis cis-1,4-Polybutadien nicht depolymerisiert. |
| K2 | depolymerisierter Festkautschuk, Basis cis-1,4-Polybutadien. |
| K3 | depolymerisierter Naturkautschuk (liquid-natural-rubber). |
| H1 | Dibenzothiazyldisulfid (herkömml. Härter) |
| H2 | Zweistufen-Härtersystem<br>1. Stufe:<br>N-Cyclohexyl-2-benzothiazylsulfenamid<br>und 2-Merkaptobenzothiazol<br>2. Stufe:<br>Diorthotolylguanidin |
| F1 | Zinkoxid (Zinkoxid aktiv, Fa. Bayer) |
| F2 | Calciumoxid |
| F3 | Kieselsäure, pyrogen (Cab-O-Sil) |
| F4 | Magnesium/Aluminium-Silikat (Kaolin Bolus Alba) |
| F5 | Ruß |
| HV | Haftvermittler, Basis Phenol-Resol-Harz (7 % freies Phenol) |
| S | gemahlener Schwefel. |

...

## Vergleichsbeispiel

Zur Herstellung eines Vergleichsklebstoffes wurde als
Festkautschuk-Komponente der in Tabelle 1 als K1 bezeichnete Festkautschuk auf der Basis von cis-1,4-
Polybutadien verwendet. 3,0 Gew.-% des nichtdepolymerisierten Festkautschuks, bezogen auf die Gesamtmenge aller Komponenten, wurden in eine intensiv verknetete Mischung der restlichen Komponenten eingearbeitet.

Die Eigenschaften des auf diesem Wege erhaltenen Klebstoffs sind der nachfolgenden Tabelle 3 zu entnehmen.

Es zeigte sich, daß die rheologischen Eigenschaften
dieses Klebstoffs nicht zufriedenstellend waren: Der
Klebstoff zog Fäden, und der Abriß wurde als zu lang
bewertet. Außerdem war eine Vorgelierbarkeit erst ab
160°C gewährleistet.

## Beispiele 1 bis 3

Mit den in der nachfolgenden Tabelle 2 quantitativ
aufgelisteten Komponenten wurden Klebstoffe gemäß der
Erfindung hergestellt. Dies geschah dadurch, daß der
Festkautschuk im Stempelkneter bei 140°C bis 150°C im
in Anwesenheit des Zinksalzes von Pentachlorthiophenol
als Depolymerisationsbeschleuniger depolymerisiert
wurde und ein Teil des Füllstoffes F4 zudosiert wurde,
um die zähviskose Masse aus dem Kneter entleeren zu
können (Beispiele 1 und 2). In diesen Fällen erfolgte
die Herstellung des Endproduktes durch nachfolgende
Homogenisierung aller Komponenten im Mischer.

...

Im Falle der Verwendung eines depolymerisierten Naturkautschuks wurden "Festkautschuk" und Flüssigkautschuk
(FlK) (Beispiel 3) im Mischer homogenisiert. Anschließend wurden die restlichen Komponenten unter Homogenisieren eingemischt.

In allen Fällen sind die Klebstoffe ab sieben Minuten
bei einer Objekttemperatur von 120°C bis 160°C vorgelierbar. Die weiteren Eigenschaften sind der nachfolgenden Tabelle 3 zu entnehmen.

<u>Tabelle 2</u>

Rezepturen der Beispiele 1 bis 3 und des Vergleichsbeispiels

| Rezeptur-<br>bestandteile | Komponente (Gew.-%) | | | |
|---|---|---|---|---|
| | Vgl.-Bsp. | Bsp. 1 | Bsp. 2 | Bsp. 3 |
| FlK | 35,0 | 35,0 | 41,8 | 41,8 |
| K1 | 3,0 | – | – | – |
| K2 | – | 3,0 | 3,6 | – |
| K3 | – | – | – | 3,6 |
| S | 6,0 | 6,0 | 6,2 | 6,2 |
| H1 | 1,2 | 1,2 | – | – |
| H2 | – | – | 3,9 | 3,9 |
| F1 | 2,9 | 2,9 | 4,4 | 4,4 |
| F2 | 4,4 | 4,4 | 6,0 | 6,0 |
| F3 | 2,5 | 2,5 | 3,4 | 3,4 |
| F4 | 40,6 | 40,6 | 26,8 | 26,8 |
| F5 | 1,0 | 1,0 | 0,9 | 0,9 |
| HV | 3,4 | 3,4 | 3,0 | 3,0 |
| Gesamt | 100,0 | 100,0 | 100,0 | 100,0 |

...

## Tabelle 3

Eigenschaften der Klebstoffe

| | Technische Daten | | | |
| | Vgl.-Bsp. | Bsp. 1 | Bsp. 2 | Bsp. 3 |
|---|---|---|---|---|
| <u>Viskosität</u><br>Extrusionszeit<br>(sec) von 20g<br>Klebstoff bei<br>2,8 bar, 2 mm-<br>Düse, 20°C | 190 | 140 | 100 | 80 |
| <u>Standfestigkeit</u> | gut | gut | gut | gut |
| <u>Abriß</u> | zu lang | kurz | kurz | kurz |
| <u>Zugscherfestig-<br>keit</u> (N/mm²)<br>bei 3 mm-Klebe-<br>schicht an ge-<br>öltem Stahlblech<br>St1405, d=0,8mm<br>nach DIN 53283 | 1,1 | 1,3 | 1,2 | 1,4 |
| <u>Kälteflexibi-<br>lität</u> | sehr gut | sehr gut | sehr gut | sehr gut |
| <u>Elastizität</u> | gut | gut | gut | gut |
| <u>Vorgelier-<br>temperatur</u> (°C) | 160 | 160 | 120 | 120 |

<u>Ergebnisse:</u>

Die Rezepturen der Beispiele 1 und 2 (Festkautschuk, im Stempelkneter depolymerisiert und anschließend in Flüssigkautschuk gelöst) zeigen bei niedriger Viskosität ein gutes rheologisches Verhalten.

...

Die niedrigste Viskosität wird in der Rezeptur des Beispiels 3 mit depolymerisiertem Naturkautschuk (liquid natural rubber) erzielt, der vor der Einarbeitung in die Klebstoffmischung nicht in Flüssigkautschuk gelöst wurde. Die Rheologie dieses Klebstoffs ist ebenfalls sehr gut. Außerdem zeigt er von allen hergestellen Rezepturen die höchste Zugscherfestigkeit.

Entsprechend der Aufgabenstellung sind die Klebstoffe der Beispiele 1 bis 3 bei Temperaturen ab 120°C vorgelierbar und weisen nach Härtungszyklen von bis zu 30 min bei 160 bis 220°C eine sehr gute Kälteflexibilität sowie eine gute Elastizität auf.

P a t e n t a n s p r ü c h e

1. Klebstoffe auf Kautschukbasis, enthaltend

(a) stereospezifischen Polybutadien-Flüssigkautschuk
    in Mengen von 20 bis 60 Gew.-%,

(b) stereospezifischen cis-1,4-Butadien-Festkautschuk
    und/oder festen Naturkautschuk in Mengen von 2 bis
    8 Gew.-%,

(c) einen oder mehrere Härter oder Härtersysteme in
    Mengen von 5 bis 15 Gew.-%,

(d) Füllstoffe in Mengen von 25 bis 70 Gew.-% und
    gegebenenfalls

(e) Haftvermittler in Mengen von 1 bis 8 Gew.-%,

dadurch gekennzeichnet, daß sie als Komponente (b)
einen oder mehrere chemisch irreversibel depolymerisierte Festkautschuke natürlichen oder synthetischen
Ursprungs in Mengen von 1,5 bis 5 Gew.-% bezogen auf
die Summe der Bestandteile enthalten.

2. Klebstoffe nach Anspruch 1, dadurch gekennzeichnet,
daß sie einen oder mehrere im Stempelkneter durch Depolymerisation hergestellten Flüssigkautschuk in einer
Menge von 25 bis 40 Gew.-% enthalten, wobei eine Menge
an Depolymerisationsbeschleuniger von 0,2 bis
1,5 Gew.-% auf zu depolymerisierendem Kautschuk eingesetzt wurde.

3. Klebstoffe nach Ansprüchen 1 und 2, dadurch gekennzeichnet, daß Schwefel in einer Menge von 2 bis
12 Gew.-%, bezogen auf die Summe der Bestandteile,
vorliegt.

                                        . . .

4. Verfahren zur Herstellung von Klebstoffen auf
Kautschukbasis mit einem Gehalt an

(a) stereospezifischem Polybutadien-Flüssigkautschuk
     von 2 bis 6 Gew.-%,

(b) stereospezifischem cis-1,4-Butadien-Festkautschuk
     und/oder festem Naturkautschuk von 1 bis 10 Gew.-%,

(c) einem oder mehreren Härtern oder Härtersystemen
     von 5 bis 15 Gew.-%,

(d) Füllstoffen von 25 bis 70 Gew.-% und gegebenenfalls

(e) Haftvermittlern von 1 bis 8 Gew.-% und/oder Schwefel in Mengen von 2 bis 12 Gew.-%,

dadurch gekennzeichnet, daß man

(f) einen oder mehrere Festkautschuke natürlichen oder
     synthetischen Ursprungs chemisch irreversibel bis
     auf eine Viskosität von 2000 bis 20 000 P bei 20°C
     depolymerisiert,

(g) die erhaltenen Depolymerisationsprodukte gegebenenfalls in Flüssigkautschuk löst, und

(h) die erhaltenen Lösungen auf an sich bekannte Weise
     mit den Komponenten (a) und (c) bis (e) zu einer
     einheitlichen Kautschukmischung verarbeitet.


5. Verfahren nach Anspruch 4, dadurch gekennzeichnet,
daß man die Depolymerisation auf friktionierten Walzen
durchführt.


6. Verfahren nach Anspruch 4, dadurch gekennzeichnet,
daß man die Depolymerisation in einem Stempelkneter
durchführt.


7. Verfahren nach Anspruch 6, dadurch gekennzeichnet,
daß man die Depolymerisation in einem Stempelkneter
unter Einsatz eines Depolymerisationsbeschleunigers
durchführt.

. . .

8. Verfahren nach Anspruch 7, dadurch gekennzeichnet, daß man als Depolymerisationsbeschleuniger des Zinksalz des Pentachlorthiophenols verwendet.

9. Verfahren nach Ansprüchen 4 bis 8, dadurch gekennzeichnet, daß man die erhaltenen Depolymerisationsprodukte in Flüssigkautschuk auf der Basis stereospezifischer Polybutadiene löst.

10. Verwendung von Klebstoffen auf Kautschukbasis nach Ansprüchen 1 bis 3 bei der Verklebung von Metallteilen im Automobilbau.

**Europäisches
Patentamt**

**EUROPÄISCHER RECHERCHENBERICHT**

**0256316**
Nummer der Anmeldung

EP 87 11 0284

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| D,A | EP-A-0 097 394 (EVODE LTD) <br> * Ansprüche 1,6 * <br> --- | | C 09 J 3/12 |
| A | FR-A-2 303 678 (UNIROYAL) <br> * Ansprüche 1,4 * <br> ----- | | |

**RECHERCHIERTE SACHGEBIETE (Int. Cl.4)**

C 09 J
C 08 L

Der vorliegende Recherchenbericht wurde für alle Patentansprüche erstellt

| Recherchenort | Abschlußdatum der Recherche | Prüfer |
|---|---|---|
| DEN HAAG | 10-11-1987 | VAN HUMBEECK F.W.C. |

**KATEGORIE DER GENANNTEN DOKUMENTEN**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angefzhrtes Dokument
............................................................................................
& : Mitglied der gleichen Patentfamilie, übereinstimmendes
    Dokument

EPO FORM 1503 03.82 (P0403)